# DEMANDE DE BREVET EUROPEEN

(11) **EP 0 973 113 A2**
(43) Date de publication de la demande: **19.01.2000**
(21) Numéro de dépôt: 99500082.5
(22) Date de dépôt: 14.05.1999
(51) Int. Cl.: G06F 17/60

(54) **Système de télé-enquête**

(30) Priorité: 14.07.1998 ES 9801499
(71) Demandeur: Urresti Garcia, Jon, 01005 Vitoria (Alava) (ES); Iglesias Pimentel, Santiago Luis, 48910 Sestao (Vizcaya) (ES)
(72) Inventeur: Urresti Garcia, Jon, 01005 Vitoria (Alava) (ES); Iglesias Pimentel, Santiago Luis, 48910 Sestao (Vizcaya) (ES)
(74) Mandataire: Urizar Barandiaran, Miguel Angel

(57) **Abrégé**

Système de télé-enquête qui contient une série de terminaux de télé-enquête comme moyens pour recueillir des données de personnes qui, assistées par des moyens multimédias, les ont elles-mêmes enregistrées et introduites grâce à un moniteur tactile ou un clavier, les transmettant à un système central qui contient une banque de données d'enquêtes et une banque de données d'identification des usagers, remettant des abonnements, des tickets ou de l'argent dans le but d'encourager la réalisation d'enquête.

Avec application dans le domaine de l'informatique et des communications.

## Description

Le système de télé-enquête est un nouveau procédé pour l'enquête dont le contenu particulier est la possibilité d'enquête à distance à travers un système d'autoremplissage monitorisé, autonome ou assisté à distance et dont l'information résultant du système peut être sauvegardée au niveau informatique ou envoyée à travers des systèmes de télécommunication.

Le système se présente sous forme d'une structure de type cabine, ouverte ou fermée avec un ou plusieurs postes de clavier ou d'enquête, structure qui est reliée à un centre de calcul où sont envoyées les données pour les analyser postérieurement.

Cette structure que nous appelerons cabine contenant le set est équipée, à l'intérieur, d'une série de composants qui seront expliqués et qui permettent son fonctionnement.

La finalité du système est la possibilité de ne plus recourir à l'enquêteur comme intermédiaire entre les données requises dans une enquête et les sondés, ou tout au moins d'en réduire la présence ou assistance à distance. Pour cela, on installe la cabine à un point fixe pour permettre à une personne de s'autosonder, soit de façon indépendante soit assistée à distance par l'intermédiaire des nouvelles technologies.

En somme, le système objet de l'invention:
- Recueille les informations de personnes qui les ont elles-mêmes enregistrées ou introduites de façon assistée ou autonome avec le moniteur tactile ou clavier; elles sont assistées par tous les composants multimédias, comme la vidéo-conférence, les haut-parleurs, les cartes graphiques, les microphones, etc.
- Transmet les informations enregistrées par le modem ou tout autre technologie similaire.
- Permet l'interaction avec la machine et avec des téléopératrices.
- Délivre des abonnements, des tickets ou de l'argent pour encourager la réalisation de l'enquête ou faciliter tout autre service postérieur.

En définitive, il permet la réalisation d'enquêtes de façon visuelle, graphique et audio, tout en étant assisté de façon interactive avec la machine ou à distance avec une téléopératrice. Ces enquêtes et ces informations sont envoyées à un centre de calcul par des techniques de télécommunication (modem, téléphone, ou fibre optique) pour un traitement informatique postérieur.

Pour mieux comprendre l'objet de la présente invention, on représente sur les plans une forme préférentielle de réalisation pratique, susceptible de changements accessoires qui ne dénatureront pas son fondement.

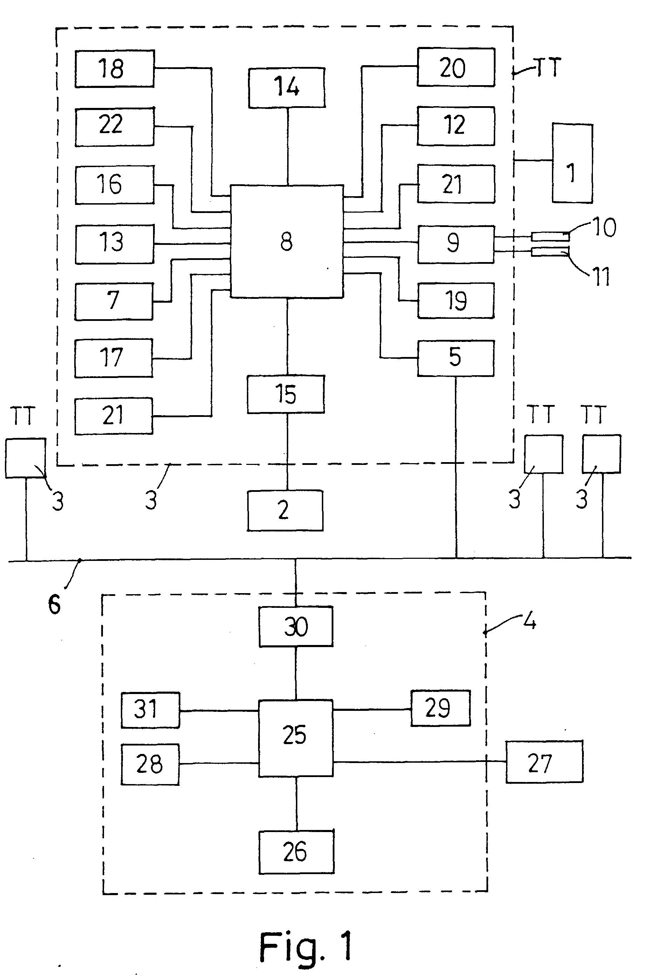

La figure 1 est un diagramme de blocs de composants physiques du système objet de l'invention.

La figure 2 est un diagramme de blocs des fonctions à réaliser par les composants de la figure 1.

On décrit ensuite un exemple de réalisation pratique, non limitative, de cette invention.

### Composants du Système

Parmi les composants, il faut distinguer les éléments des terminaux (3) de télé-enquête situés dans des endroits accessibles au public (1) et le système central (4) charger de monitoriser les terminaux à distance, recueillir et traiter les enquêtes et créer les nouvelles enquêtes à réaliser.

### Terminaux télé-enquête (3)

### Description

On entend par terminal télé-enquête (3) un terminal télématique qui permet à l'usager (1) la réalisation d'enquêtes électroniques à travers ses composants. Le terminal télé-enquête se présente physiquement sous une structure type cabine, ouverte ou fermée qui est reliée via LAN ou WAN à un centre serveur où sont envoyées les informations pour leur analyse postérieure.

On peut distinguer trois types de terminaux télé-enquête selon la connexion au serveur central (4) ou le type de fonction qu'ils réalisent, le plus courant étant le TT1 (3)
- TT1: terminal télé-enquête connecté via RTC/RDSI/GSM à un serveur local (SCEP) ou au serveur central (SCEN).

Les deux autres terminaux TT2 et TT3 ne sont que des dérivés du TT1.
- TT2: Terminal télé-enquête connecté sur un réseau local à un terminal télé-enquête principal.
- TT3: Terminal de télé-enquête principal qui en plus des fonctions du TT2 réalise la connexion au système central (SCEN) pour l'envoi de données et l'actualisation des bases de données locales.

### Terminal télé-enquête TT1 (1)

Dans ce cas, l'infrastructure est simplifiée n'ayant pas à établir de réseau de zone locale entre les différents terminaux de télé-enquête.

On dispose pour chaque terminal (1) d'un modem (5) pour se connecter au système central (4). Il faudra également une ligne téléphonique (6) et un lecteur de CD-rom (7).

Nous allons maintenant décrire la fonction des composants:
- CPU ou Unité de Processus Central (8) le noyau de l'ordinateur personnel qui contrôlera toutes les fonctions du terminal de télé-enquête (3).
- Carte de son (9) avec haut-parleurs (10) et microphone (11).
Elle convertit le son numérique en analogique et viceversa. Elle permet à l'usager final (1) d'avoir des options audio. L'usager pourra écouter la voix de l'opératrice en cas d'aide en-ligne ou pour montrer un fragment de son si l'on veut réaliser des enquêtes avec options audio.
- Carte codage/décodage de vidéo (12). Sa fonction consiste à décoder les fichiers vidéo (13) enregistrés pour pouvoir les visualiser sur l'écran (14). L'objectif est de donner la possibilité à l'usager (1) de visualiser un fragment de vidéo associé à une enquête définie. La finalité est de faciliter la compréhension ou la capacité de répondre correctement à une réponse, la publication des propres produits à tester ou autres, en vue du propre marketing ou simplement pour faire patienter pendant que le système traite les informations.
- Clavier et souris (15). Le clavier et la souris ne sont pas systématiquement opérationnels, l'usager (1) n'utilisant que l'écran tactile (14) pour interagir avec le système. Le clavier et la souris se trouvent dans la cabine de télé-enquête. Dans ce cas, ils servent d'interface entre l'usager de maintenance (2) et le terminal (3). Cela lui permet de faire un back-up, de mettre à jour des versions, de rentrer des enquêtes multimédias de grande capacité, etc.
- Écran tactile (14). Il permet à l'usager (1) de réaliser les enquêtes en sélectionnant avec le doigt les différentes options qui sont affichées sur l'écran. La caractéristique principale de ces écrans est qu'ils sont sensibles au toucher, facilitant ainsi l'interface avec l'usager et éliminant les mécanismes intermédiaires comme le clavier et la souris (15).

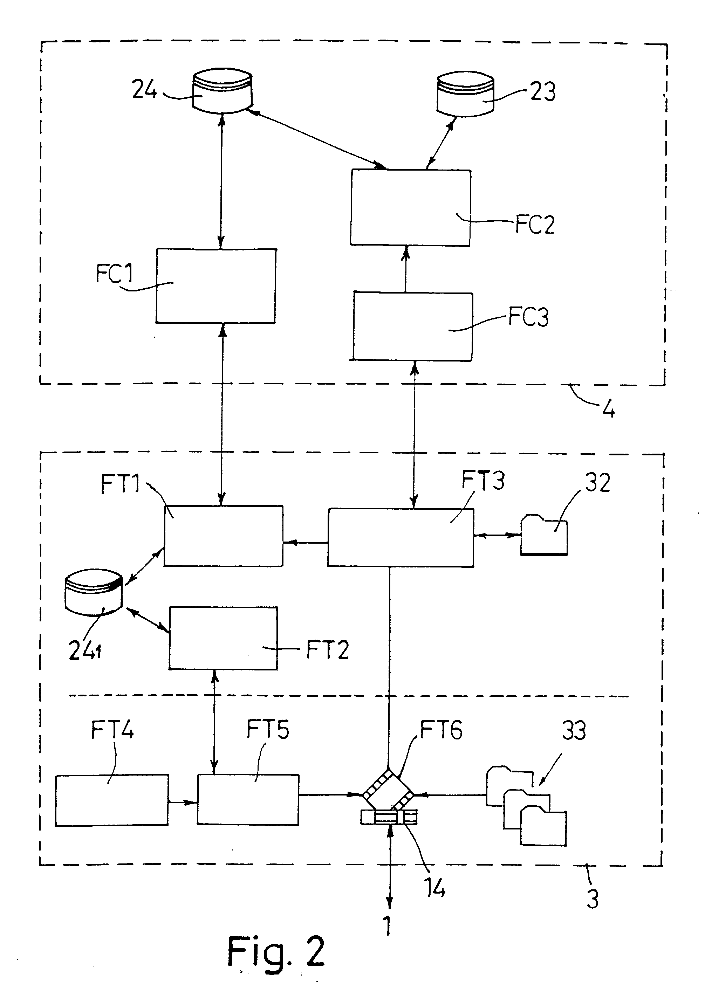

Comme on peut l'observer sur la figure 2, le SW du terminal de télé-enquête (3) peut être divisé en deux parties. Cela est dû à ce qu'une partie des processus, en cas d'utilisation de plusieurs terminaux (3) de télé-enquêtes par localisation, seront communs à tous les terminaux et pour cela ils seront exécutés dans le terminal de télé-enquête principal alors que les autres (de la partie inférieure) seront exécutés sur tous les terminaux. Les processus qui sont exécutés sur tous les terminaux agiront comme clients des processus du terminal principal.

On peut disposer, dans les terminaux (3), d'une copie (24I) de la base de données d'identification (24) du système central (4).

On va maintenant définir les différentes fonctions du terminal télé-enquête (3):
- FT1: Maintenance BD Identification. Ce processus se chargera de recueillir les nouvelles identifications d'usagers (1), en les stockant provisoirement jusqu'à ce qu'elles soient envoyées au système central (4). Il se charge également de stocker les informations sur les enquêtes réalisées par un usager (1). Il recueille les actualisations de la base de données d'identification (24) du système central (21).
- FT2: Comparaison des éléments biométriques. Il recueille les informations biométriques de l'usager (1) et il les compare avec celles stockées sur la base de données (24) ou (24').
- FT3: Maintenance locale des réponses. Il stocke, dans un fichier (38), les réponses à toutes les enquêtes qui ont été réalisées entre deux communications avec le système central (4).
- FT4: Cycle de captage d'usagers. Il s'agit de moyens multimédias qui sont visualisés quand il n'y a aucun usager. La projection de cette présentation s'interrompt quand un nouvel usager arrive. Ce cycle démarre automatiquement quand un usager achève son enquête.
- FT5: Demande identification. Un nouvel usager ne peut pas accéder immédiatement au système quand il y accède pour la première fois, il doit passer par les étapes suivantes: il s'identifie comme nouvel usager, le système lui demande une série d'informations relatives à son profil, âge, sexe, lieu de résidence ou autres et il lui demande également un code ou mot-clef d'identification d'accès; le système sera illustré graphiquement avec une méthode de choix de codes faciles à identifier et à retenir. Puis le système lui demandera son identification biométrique. Ce processus démarre quand un nouvel usager arrive, à la fin des enquêtes, ou même de façon aléatoire, pendant la réalisation d'une enquête. Il recueille les données biométriques d'un usager et les envoie au processus de comparaison (FT2). Quand on obtient des résultats négatifs de reconnaissance, c'est-à-dire quand on ne reconnaît pas l'usager, on demandera à l'usager ses coordonnées de profil si nécessaire et on créera une nouvelle entrée dans la base de données d'identification (24).
- FT6: Viseur local d'enquêtes. Ce processus se charge de présenter à l'usager toutes les enquêtes (33) disponibles et selon son choix, il fait démarrer celle qu'il a choisie. Quand la visualisation d'une enquête s'achève, les réponses seront envoyées au processus de maintenance locale FT3.

Les fonctions SW du système central (4) sont les suivantes:
- FC1: Envoi des données d'identification. Il se chargera d'envoyer au terminal (3) de télé-enquête les informations de la base de données (24) d'identification qui auront été modifiées depuis la dernière connexion. Pour cela, il faut tenir un registre des changements produits sur la base de données. Cette information contient aussi bien les données biométriques et du profil des usagers que celles de la base de données remplies par un usager.
- FC2: Vérification de fiabilité des données. Ce processus est le plus complexe du système central. Il se chargera de vérifier si les données qui arrivent sont valables. C'est-à-dire, il vérifiera lorsque des données sur les enquêtes remplies par un usager sont reçues, si celles-ci sont remplies correctement, si elles pouvaient être remplies par cet usager tant par son profil que par le fait qu'il ne l'avait pas remplie auparavant. Une fois ces vérifications réalisées, il se chargera de stocker ces informations dans les deux bases de données (23), (24).
- FC3: Réception de données d'enquêtes et d'identifications. Il se chargera d'actualiser les différentes copies (241) des bases de données d'identification dans les terminaux de télé-enquête (3).

### Fonctions SW du système de création d'enquêtes pour le système.

La création d'enquêtes comprend trois fonctions principales:
- FCE1: créer les tableaux de la base de données d'enquêtes (23). Dans ces bases de données, on stocke les tableaux correspondant à chaque enquête et les résultats de l'enquête.
- FC2: la présentation des enquêtes multimédias. À travers les présentations multimédias, l'usager répond à l'enquête.
- FCE3: SW de stockage. Le SW pour stocker les réponses d'un usager à une enquête dans la base de données (23).

### Fonctionnement du système.

Le terminal de télé-enquête (3) est toujours prêt, présentant un cycle de captage (FT4) d'usagers. Ce cycle consiste à un ensemble de contenus mutlimédias qui se succèdent, invitant le public (1) à utiliser le terminal (3). Ce cycle pourrait inclure également des annonces publicitaires.

Quand le système détecte la présence d'un usager éventuel (1) soit par un détecteur de présence soit parce que quelqu'un a touché l'écran tactile (14) ou s'il utilise le système d'identification, par exemple biométrique, le cycle de captage d'usagers (FT4) est interrompu et le processus d'attention de l'usager commence. Ce processus commence par la reconnaissance de l'usager (FT5).

La première chose que doit faire l'usager (1) en arrivant sur un terminal de télé-enquête (3) est de s'identifier. Pour cela, on recueille ses paramètres biométriques et ils sont comparés (FT2) avec ceux stockés dans la base de données d'identification (24) ou (241).

Dans la base de données d'identification (24), on conserve (1) les données paramétriques de chaque usager, l'information sur l'âge, le sexe et le domicile et le numéro de code ou mot-clef d'identification choisi par l'usager (1). D'autre part, on stocke des informations sur les enquêtes réalisées auparavant par cette personne pour éviter toute fraude.

Si l'usager (1) ne se trouve pas dans la base de données (24), on créera une nouvelle entrée et on lui demandera d'introduire les paramètres nécessaires pour déterminer son profil. À partir du profil de l'usager (1), le système déterminera le secteur de population auquel appartient le sondé.

Une fois le profil déterminé, on vérifie quelles enquêtes ont été remplies par cette personne. Parmi les enquêtes qui n'ont pas été remplies, on vérifie celles qui requièrent d'autres entrées du secteur de population de l'usager pour éviter qu'une personne puisse remplir deux fois une enquête.

Le terminal de télé-enquête (3) présente les enquêtes à l'usager (1) qu'il peut choisir sur un écran (14). Si l'usager (1) en choisit une, le système de présentation d'enquêtes (FT6) se mettra alors en route avec l'enquête correspondante.

Le système de présentation (FT6) d'enquêtes consiste en un processus qui présente une série de questions et qui permet aux usagers de répondre à chacune d'elles. Les réponses sont stockées au fur et à mesure dans un fichier provisoire (32) qui sera envoyé plus tard à la base de données d'enquêtes (23) du système central (4).

À tout moment, l'usager (1) peut abandonner l'enquête au moyen d'une option présentée à l'écran (14). S'il renonce à l'enquête, le fichier provisoire s'effacera et toute l'enquête sera annulée.

Une fois l'enquête remplie par l'usager, il pourra recevoir une récompense. On remettra la récompense par l'imprimante (16), de l'argent par le distributeur (18) ou tout autre prix; ensuite, l'usager (1) pourra demander de réaliser une autre enquête ou d'abandonner le système. Pour vérifier si l'usager (1) n'a pas changé pendant la réalisation de l'enquête, le système peut vérifier à tout instant l'identité de l'usager; on vérifiera toujours l'identité de l'usager avant de conclure l'enquête. Pour cela les données biométriques de l'usager sont gardées dans une copie locale (241). On les demandera à l'usager (1) qui réutilisera le dispositif de saisie des données biométriques (20). Les données introduites seront comparées (FT2) avec celles introduites au début pour vérifier s'il n'y a eu aucune fraude.

Si pendant le processus d'enquête, c'est-à-dire, pendant le fonctionnement du système de présentation d'enquête (FT6), il s'écoule un intervalle de temps d'inactivité, sans aucun signal de l'usager (1), on le présentera de manière interactive à l'usager et s'il n'y a pas de réponse, on considérera que l'usager a abandonné le terminal (3), on effacera l'enquête et on recommencera le cycle de captage d'usagers (FT4).

L'usager a toujours la possibilité d'obtenir de l'aide. Il y a trois types d'aide:
- Aide dépendante du contexte. Cette aide est proposée à l'usager (1) pour tout problème; par exemple, quand surviennent des erreurs au moment de l'identification, l'usager recevra une explication de l'erreur, les causes et les solutions possibles. S'il y a une connexion téléphonique avec une opératrice (27), l'usager (1) pourra l'appeler pour exposer le problème.
- Aide au cours de l'enquête. Pendant la réalisation d'une enquête on peut demander plus de détails sur la signification de la question, évitant ainsi tous malentendus. Cette aide apparaît à chaque présentation constituant l'enquête.
- Aide générale: il s'agit d'une présentation multimédia sous forme tutorielle qui explique les principales caractéristiques et les instructions d'usage du système de télé-enquête.

Si l'enquête a été réalisée de façon autonome, en n'utilisant que l'aide assistée de la machine, on procèdera à l'envoi via modem des données enregistrées dans la feuille de calcul ou autre du système central pour leur traitement postérieur; s'il y a eu assistance par téléconférence, les données auront déjà été enregistrées simultanément dans le système central à distance.

Il existe une variante du système. Le système enverra les renseignements biométriques de l'usager associé aux caractéristiques du profil et au numéro de code marqué par l'usager avec le clavier tactile ou standard. L'usager sera enregistré au bout d'un certain temps, par exemple en vingt-quatre heures; pendant ce temps, il pourra remplir les enquêtes que le système lui permettra de faire; un abonnement ou un prix lui sera attribué pour être le nouvel usager de la première enquête.

Le système reçoit, à des heures déterminées, toutes les identifications biométriques de ou des nouveaux usagers et les codes; il validera les marques une à une, évitant les fraudes traitres et il les comparera avec les bases existantes d'usagers déjà enregistrés. Si on ne trouve pas de coïncidences ni de fraudes, on enregistrera l'usager avec cette marque et ce code; dans le cas contraire, ou en cas de répétition de marques lors du contôle, on refusera l'accès jusqu'au lendemain. De cette façon, nous obtenons un système validé qui évite toutes fraudes.

Quand l'usager une fois enregistré accède alors au système, il entrera son code, la cabine enverra le code et fera un contrôle du code et non de la marque, ce qui accélérera le processus. Puis, quand le système aura trouvé le code correspondant à une marque, il enverra la marque à la cabine; en cabine, on fera un contrôle d'une marque avec l'autre, augmentant la vitesse du système. Quand le contrôle identifiera la marque envoyée par la centrale comme celle correspondant à l'usager en cabine, on acceptera l'accès aux enquêtes. La suite du fonctionnement du système correspond à ce qui a déjà été expliqué antérieurement.

## Revendications

1. Système de télé-enquête caractérisé par les composants suivants:
a).- une série de terminaux de télé-enquête situés dans des endroits accessibles au public, chacun étant formé par:
a1) une unité intelligente de processus central que contrôlent les composants et les fonctions de chaque terminal
a2) une carte de son numérique/analogique avec des haut-parleurs et un microphone.
a3) une carte de codage /décodage de vidéo en connexion avec des fichiers vidéo associés aux enquêtes.
a4) un clavier et une souris
a5) un écran tactile, un camescope et un détecteur de présence
a6) des moyens pour émettre des cartes, des abonnements ou de l'argent
a7) un lecteur de CD-rom
a8) des moyens de reconnaissance de l'usager
a9) un modem de communication avec
b).- un système central qui comprend
b1) au moins un ordinateur qui contient une banque de données d'enquêtes où sont stockés les tableaux correspondants à chaque enquête et les résultats de l'enquête et une banque de données d'identification des usagers
b2) une carte de son et des haut-parleurs pour permettre l'aide en-ligne de l'usager par l'opératrice.
b3) un clavier et une souris
b4) une imprimante
b5) un lecteur de CD-rom
b6) un modem

2. Système de télé-enquête, selon les exigences antérieures, caractérisé par la présence de terminaux principaux entre les terminaux et le système central.

3. Système de télé-enquête, selon les exigences antérieures, caractérisé car les unités intelligentes de chaque terminal de télé-enquête et du terminal principal sont programmées pour les fonctions conjointes suivantes:
a).- maintenance d'identification où l'on recueille les données des nouveaux usagers (1) et des enquêtes remplies, en les stockant provisoirement jusqu'à ce qu'elles soient envoyées au système central (4), recueillant les actualisations de la base de données d'identification (24) du système central (21);
b).- comparaison où l'on recueille les données personnelles/biométriques de l'usager (1) et où on les compare avec celles stockées dans la base de données (24) ou (24');
c).- maintenance locale de réponse où l'on stocke dans un fichier (38) les réponses à toutes les enquêtes qui ont été réalisées entre deux communications avec le système central (4);
d).- cycle de captage d'usagers où l'on visualise les moyens multimédias quand il n'y a aucun usager en service;
e).- demande d'identification où le système demande au nouvel usager ses données personnelles/biométriques et de choisir un code/mot-clef d'identification, en envoyant les données à la fonction de comparaison mentionnée; si l'usager n'est pas reconnu, on lui demandera les informations nécessaires pour créer une nouvelle entrée dans la base de données d'identification;
f).- Viseur local d'enquêtes où l'on présente à l'usager toutes les enquêtes (33) disponibles et selon son choix mise en marche de celle choisie.

4. Système de télé-enquête, selon les exigences antérieures, caractérisé parce que l'ordinateur du système central est programmé pour les fonctions suivantes:
a).- envoi de données d'identification qui se chargera d'envoyer au terminal (3) de télé-enquête les informations de la base de données (24) d'identification qui ont changé depuis la dernière connexion, information qui comprend les données biométriques et de profil des usagers ainsi que les informations sur les bases de données remplies par un usager;
b).- vérification de fiabilité des données qui se chargera de vérifier si les données qui arrivent sont valables par rapport au programme préenregistré de chaque enquête, procédant au stockage de ces données dans les deux bases de données (23), (24);
c).- réception de données d'enquêtes et d'identifications qui se chargera d'actualiser les différentes copies (241) des bases de données d'identification dans les terminaux de télé-enquête (3).
